# EUROPÄISCHE PATENTSCHRIFT

(11) **EP 4 065 866 B1**
(45) Veröffentlichungstag und Bekanntmachung des Hinweises auf die Patenterteilung: **03.04.2024**
(21) Anmeldenummer: 20806957.5
(22) Anmeldetag: 11.11.2020
(51) Int. Cl.: F16H 63/04, F16H 63/30

(54) **AKTUATORMODUL**
ACTUATOR MODULE
MODULE ACTIONNEUR

(30) Priorität: 26.11.2019 DE 102019131940
(43) Veröffentlichungstag der Anmeldung: 05.10.2022
(73) Patentinhaber: KNORR-BREMSE Systeme für Nutzfahrzeuge GmbH, 80809 München (DE)
(72) Erfinder: GEIS-ESSER, Daniel, 81377 München (DE); HOLNA, Hans, 82024 Taufkirchen (DE); UPADHYAYA, Vishwas, 80933 München (DE); HEIGL, Korbinian, 85652 Pliening (DE)
(86) Internationale Anmeldenummer: PCT/EP2020/081690
(87) Internationale Veröffentlichungsnummer: WO 2021/104861

(56) Entgegenhaltungen:
- WO-A1-2015/150407
- DE-A1- 10 021 146
- DE-A1- 10 334 628
- JP-A- 2001 099 312
- US-A- 4 619 151
- US-A- 5 832 777
- US-B1- 6 481 304

## Beschreibung

Die vorliegende Erfindung betrifft ein Aktuatormodul für ein Getriebe, ein Getriebe, einen Antriebsstrang, sowie ein Fahrzeug.

In Getrieben wird normalerweise zum Einstellen einer Schaltstellung bzw. einer Neutralstellung eine Schaltgabel parallel zu einer Stellrichtung eines Getriebestellers verschoben. Die Schaltgabel greift beispielsweise in ein Schaltelement, insbesondere eine Schaltmuffe, ein und verschiebt dieses entsprechend einer Schaltbewegung, um die gewünschte Schaltstellung einzustellen. Dazu wird beispielsweise eine Drehbewegung eines Elektromotors in eine translatorische Stellbewegung umgewandelt, die dann über die Schaltgabel dem Schaltelement aufgeprägt wird. Dies erfolgt beispielsweise über ein Kugelumlaufgetriebe mit Spindel und Mutter.

Ein solcher Mechanismus weist oft mehrere Elemente auf. Neben den oben genannten Elementen zur Erzeugung der Schaltbewegung sind zudem Erfassungsmittel vorzusehen, die beispielsweise dazu ausgebildet sind, die aktuelle Schaltstellung zu erfassen. Diese mehrteilige Ausführung erhöht den Aufwand bei Montage und Wartung enorm.

Entsprechende Mechanismen sind beispielsweise in den Druckschriften DE 100 21 146 A1, US 4 619 151 A, auf welcher im Übrigen die zweiteilige Anspruchsfassung basiert, und DE 103 34 628 A1 gezeigt.

Der Erfindung liegt daher die Aufgabe zugrunde, eine Lösung aufzuzeigen, diesen Aufwand zu reduzieren.

Diese Aufgabe wird durch ein Aktuatormodul für ein Getriebe nach Anspruch 1 gelöst.

Vorteilhafte Weiterbildungen sind Gegenstand der Unteransprüche.

Erfindungsgemäß ist ein Aktuatormodul für ein Getriebe mit mindestens zwei Übersetzungsstufen vorgesehen, das einen Getriebesteller aufweist, der dazu ausgebildet ist, eine Stellbewegung parallel zu einer Stellrichtung auszuführen, und das einen Übertragungsmechanismus aufweist, der dazu ausgebildet ist, die Stellbewegung in eine Schaltbewegung umzusetzen, die eine Einstellung einer Schaltstellung in dem Getriebe bewirkt. Der Übertragungsmechanismus weist einen ersten Koppelpunkt auf, über den er mit dem Getriebesteller verbunden ist und worüber er dessen Stellbewegung aufnehmen kann. Der Übertragungsmechanismus weist einen zweiten Koppelpunkt auf, über den er mit einem Schaltelement eines Getriebes verbunden werden kann, um auf das Schaltelement die Schaltbewegung aufzuprägen.

Unter dem Begriff "Koppelpunkt" wird in dieser Anmeldung insbesondere eine Stelle bzw. ein Element des Übertragungsmechanismus' verstanden worüber die Stellbewegung auf den Übertragungsmechanismus aufgeprägt werden kann, bzw. worüber die Schaltbewegung abgegeben werden kann. Die Koppelpunkte stellen daher Schnittstellen dar, über die der Übertragungsmechanismus mit dem Getriebesteller bzw. mit dem Schaltelement in Kontakt treten kann. Diese Schnittstellen können unterschiedlich ausgebildet sein, wie weiter unten beispielhaft gezeigt wird.

Gmäß der vorliegenden Erfindung weist der Übertragungsmechanismus ein Übertragungselement auf, das dazu ausgebildet ist, die Stellbewegung in die Schaltbewegung umzusetzen. Das Übertragungselement kann beispielsweise als Stab ausgebildet sein oder einen Stab aufweisen.

Vorzugsweise ist das Übertragungselement dazu ausgebildet, eine Übersetzung der Stellbewegung in die Schaltbewegung zu bewirken. Dabei können sowohl eine Überals auch eine Untersetzung vorgesehen sein. Auch eine 1:1-Übersetzung ist denkbar, so dass die Stellbewegung einer Bewegung entspricht, die eine gleichlange Strecke zurücklegt, wie die daraus resultierende Schaltbewegung. Bei einer Untersetzung, d.h. wenn die Stellbewegung eine längere Strecke zurücklegt als die daraus resultierende Schaltbewegung, ist vorteilhaft, dass der Getriebesteller, der die Stellbewegung ausführt, kleiner bzw. leistungsschwächer im Vergleich zu einer Ausführungsform mit Übersetzung ausgelegt werden kann, da gleichzeitig die Kraft, die über den Übertragungsmechanismus von dem Getriebesteller auf das Schaltelement aufgebracht wird, vergrößert wird. Bei einer Übersetzung ist wiederum vorteilhaft, dass die Strecke, die die Stellbewegung zurücklegt, kleiner ist als die Strecke der Schaltbewegung. Dadurch muss weniger Bauraum für den Getriebesteller bzw. für dessen Stellbewegung vorgesehen werden.

Das Übertragungselement ist gemäß der vorliegenden Erfindung um einen Drehpunkt drehbar vorgesehen und dazu ausgebildet, durch die Stellbewegung mittels Drehung eine Schaltbewegung zu erzeugen. Das Übertragungselement ist hierbei in einem Drehpunkt, der zwischen den Koppelpunkten liegt, drehbar gelagert. Die Übersetzung kann somit durch die jeweiligen Abstände zwischen Drehpunkt und den jeweiligen Koppelpunkten bestimmt werden, wobei weitere Einflüsse, wie beispielsweise eine Kontaktflächenpaarung oder ein Längenausgleich, wie weiter unten beschrieben, die Übersetzung weiter beeinflussen können.

Der Übertragungsmechanismus weist einen Längenausgleichsmechanismus auf, der dazu ausgebildet ist, einen Längenausgleich zwischen den Koppelpunkten bei Aufbringen der Stellbewegung durchzuführen. Der Grund dafür liegt darin, dass die Übertragung der Stellbewegung in die Schaltbewegung durch eine Drehbewegung erfolgt, und Stellbewegung und Schaltbewegung bevorzugt parallel zueinander ausgeführt werden, so dass zwischen den Koppelpunkten ein Längenausgleich durchgeführt werden muss. Dieser Längenausgleichsmechanismus kann unterschiedlich ausgebildet sein. Der Längenausgleichsmechanismus ist bevorzugt als Teil des Übertragungselementes ausgebildet.

Der Längenausgleichsmechanismus weist gemäß der vorliegenden Erfindung eine elastische Vorspannung auf, die zwischen den Koppelpunkten wirkt. Diese elastische Vorspannung kann vorzugsweise durch eine Feder erzeugt werden. Durch die elastische Vorspannung wird bevorzugt bewirkt, indem der Längenausgleichsmechanismus stets mit einer Kraft beaufschlagt wird, dass das Übertragungselement stets bestrebt ist, sich zwischen den Koppelpunkten auszudehnen.

Vorzugsweise ist der Getriebesteller elektrisch betätigbar. Dies umfasst insbesondere eine magnetische und/oder eine mechanische Betätigung oder Erzeugung der Stellbewegung. Die Stellbewegung ist dabei bevorzugt translatorisch, insbesondere parallel zu einer Getriebewellenachse, ausgebildet.

Vorzugsweise weist der Getriebesteller zur Erzeugung der Stellbewegung ein elektrisch betätigtes Stellelement auf. Dieses Stellelement kann beispielsweise einen Elektromotor und/oder ein elektrisch und/oder magnetisch arbeitendes Stellglied aufweisen. Der Elektromotor kann als rotatorisch arbeitender Motor ausgeführt sein. Alternativ kann auch ein translatorisch arbeitender Motor, wie beispielsweise ein Linearmotor vorgesehen sein. Ein Linearmotor hat den Vorteil, dass eine Übersetzung nicht zwingend vorgesehen sein muss, um die Bewegung des Elektromotors in eine translatorische Stellbewegung oder eine Bewegung, die in die Stellbewegung übersetzt wird, umzuwandeln. Bei elektrischer und/oder magnetischer Betätigung wird die benötigte Kraft durch elektrische und/oder magnetische Felder erzeugt, um die Stellbewegung oder eine Bewegung, die in die Stellbewegung übersetzt wird, auszuführen. Ein elektrisch und/oder magnetisch arbeitendes Stellglied kann beispielsweise einen federrückgestellten Elektromagnet aufweisen, der bei elektrischer Betätigung eine Bewegung erzeugt, indem er in eine ausgelenkte Stellung bewegt wird. Wird die elektrische Betätigung deaktiviert, so wird der Elektromagnet durch die Federrückstellung wieder in die Ausgangsstellung zurückbewegt. Ein elektrisch und/oder magnetisch arbeitendes Stellglied kann rotatorisch oder translatorisch arbeiten. Die Bewegung sämtlicher elektrisch betätigter Stellelemente kann direkt als Stellbewegung wirken oder mittels einer Übersetzung in die Stellbewegung übersetzt werden.

Vorzugsweise weist der Getriebesteller eine Übersetzung auf. Die Übersetzung ist vorzugsweise dazu ausgebildet, eine Drehbewegung in eine translatorische Bewegung zu übersetzen. Die Übersetzung ist bevorzugt mit dem elektrisch betätigten Stellelement verbunden, insbesondere dann, wenn dieses einen rotatorisch arbeitenden Motor oder ein rotatorisch arbeitendes Stellglied aufweist. Auf diese Weise kann die Bewegung des elektrisch betätigten Stellelements in die Stellbewegung übersetzt werden. Die Übersetzung kann insbesondere eine Spindel und eine Mutter und/oder ein Ritzel und eine Zahnstange und/oder ein Schneckengetriebe und/oder eine Zahnradstufe aufweisen. Besonders bevorzugt weist die Übersetzung einen Kugelumlauftrieb auf.

In einer speziellen Ausführungsform ist ein Elektromotor vorgesehen, der dazu ausgebildet ist, eine Kugelumlaufspindel anzutreiben, wodurch mechanisch eine translatorische Stellbewegung hervorgerufen wird.

Vorzugsweise weist das Aktuatormodul ein Erfassungsmittel auf, das dazu ausgebildet ist, die Stellbewegung und/oder die Schaltbewegung und/oder eine Bewegung des Übertragungselementes zu erfassen. Hierzu kann insbesondere ein Positionssensor vorgesehen sein, der dazu ausgebildet ist, die entsprechende Bewegung zu erfassen. Bei einem drehbar vorgesehenen Übertragungselement kann das Erfassungsmittel bevorzugt zur Erfassung des Drehwinkels ausgebildet sein. Bevorzugt ist das Erfassungsmittel dazu ausgebildet, die Position des ersten Koppelpunktes entlang der Stellrichtung bzw. eines Elementes, dessen Position der des ersten Koppelpunktes entlang der Stellrichtung entspricht, zu erfassen. Ist eine Position und/oder ein Drehwinkel bekannt, so kann über die bekannte kinematische Beziehung zwischen der Stellbewegung und der Schaltbewegung bzw. auch unter Berücksichtigung der kinematischen Beziehung des Übertragungselementes die Position der Elemente, deren Position nicht erfasst wird, bestimmt werden.

Vorzugsweise weist das Aktuatormodul ein Steuermittel auf, das dazu ausgebildet ist, den Getriebesteller zur Erzeugung der Stellbewegung anzusteuern. Dazu weist das Steuermittel vorzugsweise elektronische Elemente, wie eine ECU, auf. Bevorzugt ist das Steuermittel auch zur Verarbeitung weiterer Informationen, insbesondere der erfassten Stellbewegung, ausgebildet, so dass eine genaue Regelung der Stellbewegung durch das Steuermittel erfolgen kann.

Durch das Vorsehen eines Steuermittels und/oder eines Erfassungsmittels die besonders bevorzugt in einem Gehäuse des Aktuatormoduls oder gemeinsam auf einer Trägerplatte vorgesehen sind, kann das Aktuatormodul zu einem integralen Bauteil ausgebildet werden, welches neben den Elementen zur Erzeugung der Schaltbewegung auch weitere Elemente aufweist. Ein solches Bauteil kann bei Wartung und Montage einfach ein- und ausgebaut werden.

Vorzugsweise weist das Aktuatormodul mindestens eine Schnittstelle auf, die dazu ausgebildet ist, Steuerbefehle zu empfangen und/oder Statusinformationen, wie. z.B. die aktuell eingestellte Schaltstellung des Aktuatormoduls, weiterzugeben. Die Schnittstelle ist bevorzugt dazu ausgebildet, mit einem BUS-System, insbesondere mit CAN, verbunden zu werden.

Das Aktuatormodul verfügt bevorzugt über eine Datenverbindung, worüber das Steuermittel, das Erfassungsmittel und/oder die Schnittstelle miteinander zur Kommunikation verbunden sind. Ferner kann auch der Getriebesteller zur Kommunikation mit dieser Datenverbindung in Kontakt stehen.

Vorzugsweise ist die Verbindung zwischen dem Getriebesteller und dem Übertragungsmechanismus in dem ersten Koppelpunkt drehbar ausgebildet oder sie weist eine Kontaktflächenpaarung auf. Eine drehbare Ausbildung kann insbesondere durch ein Gleit- oder Wälzlager erreicht werden, über das der Übertragungsmechanismus, vorzugsweise dessen Übertragungselement, und das Element des Getriebestellers, das die Stellbewegung durchführt, verbunden sind. Bei einer Kontaktflächenpaarung besteht die Verbindung zwischen dem Übertragungsmechanismus, vorzugsweise dem Übertragungselement, und dem Element des Getriebestellers, das die Stellbewegung durchführt, durch einen Kontakt beider Elemente. Diese sind so konzipiert, dass sie lediglich aneinander anstoßen, so dass die Stellbewegung auf den Übertragungsmechanismus aufgeprägt werden kann. Dazu sind Kontaktflächen an beiden Elementen ausgebildet. Insbesondere bei drehbar vorgesehenem Übertragungselement oder zur Realisierung eines Längenausgleichs, kann die Kontaktflächenpaarung so ausgebildet sein, dass beide Kontaktflächen in ihrem Kontakt aneinander abwälzen und/oder abgleiten und/oder eine Relativbewegung zueinander ausführen, um die Drehbewegung bzw. den Längenausgleich darzustellen.

Vorzugsweise weist das Aktuatormodul ein Gehäuse auf, das dazu ausgebildet ist, zumindest den Getriebesteller und den Übertragungsmechanismus aufzunehmen. Daneben können weitere Elemente in dem Gehäuse vorgesehen sein, wie beispielsweise das Erfassungsmittel und das Steuermittel, die beispielsweise oben beschrieben sind. Auch die oben beschriebene Schnittstelle kann auf dem Gehäuse vorgesehen sein. Das Gehäuse ist ferner bevorzugt dazu ausgebildet, auf oder in einem Getriebe montiert zu werden. Dazu weist das Gehäuse entsprechende Eingriffsstellen für Befestigungsmittel, wie beispielsweise Schrauben, auf. Das Gehäuse weist ferner eine Öffnung auf, durch die eine Verbindung zwischen dem zweiten Koppelpunkt und einem Schaltelement des Getriebes hergestellt werden kann. Durch das Gehäuse wird mit dem Aktuatormodul ein integrales Bauteil geschaffen, das somit als Ganzes bei Wartung und Montage ein- und ausgebaut werden kann.

Statt einem Gehäuse kann auch eine Trägerplatte vorgesehen sein, die dazu ausgebildet ist, zumindest den Getriebesteller und den Übertragungsmechanismus aufzunehmen. Daneben können weitere Elemente auf der Trägerplatte vorgesehen sein, wie beispielsweise das Erfassungsmittel und das Steuermittel, die beispielsweise oben beschrieben sind. Auch die oben beschriebene Schnittstelle kann auf der Trägerplatte vorgesehen sein. Die Trägerplatte ist ferner bevorzugt dazu ausgebildet, auf oder in einem Getriebe montiert zu werden. Dazu weist die Trägerplatte entsprechende Eingriffsstellen für Befestigungsmittel, wie beispielsweise Schrauben, auf. Durch die Trägerplatte wird mit dem Aktuatormodul ein integrales Bauteil geschaffen, das somit als Ganzes bei Wartung und Montage ein- und ausgebaut werden kann.

Erfindungsgemäß ist weiter ein Getriebe vorgesehen, das mindestens zwei Übersetzungsstufen aufweist. Dieses Getriebe weist ein Aktuatormodul wie oben beschrieben auf. Ferner weist dieses Getriebe ein Schaltelement, insbesondere eine Schaltmuffe, auf, das dazu ausgebildet ist, eine Schaltbewegung durchzuführen, um in dem Getriebe eine Schaltstellung einzustellen, wobei das Schaltelement über den zweiten Koppelpunkt mit dem Übertragungsmechanismus zur Aufprägung der Schaltbewegung auf das Schaltelement verbunden ist. Das Getriebe ist dabei vorzugsweise für ein elektrisch oder hybridisch angetriebenes Fahrzeug und/oder für ein Nutzfahrzeug ausgebildet.

Vorzugsweise ist die Verbindung zwischen dem Schaltelement und dem Übertragungsmechanismus in dem zweiten Koppelpunkt drehbar ausgebildet oder sie weist eine Kontaktflächenpaarung auf. Eine drehbare Ausbildung kann insbesondere durch ein Gleit- oder Wälzlager erreicht werden, über das der

Übertragungsmechanismus, vorzugsweise dessen Übertragungselement, und das Schaltelement verbunden sind. Bei einer Kontaktflächenpaarung besteht die Verbindung zwischen dem Übertragungsmechanismus, vorzugsweise dem Übertragungselement, und dem Schaltelement durch einen Kontakt beider Elemente. Diese sind so konzipiert, dass sie lediglich aneinander anstoßen, so dass die Schaltbewegung auf das Schaltelement aufgeprägt werden kann. Dazu sind Kontaktflächen an beiden Elementen ausgebildet. Insbesondere bei drehbar vorgesehenem Übertragungselement oder zur Realisierung eines Längenausgleichs, kann die Kontaktflächenpaarung so ausgebildet sein, dass beide Kontaktflächen in ihrem Kontakt aneinander abwälzen und/oder abgleiten und/oder eine Relativbewegung zueinander ausführen, um die Drehbewegung bzw. den Längenausgleich darzustellen.

Erfindungsgemäß ist ein Antriebsstrang für ein Fahrzeug vorgesehen, aufweisend ein Getriebe wie oben beschrieben. Der Antriebsstrang ist vorzugsweise für ein elektrisch oder hybridisch angetriebenes Fahrzeug und/oder für ein Nutzfahrzeug ausgebildet. Erfindungsgemäß ist ein Fahrzeug vorgesehen, aufweisend ein Getriebe wie oben beschrieben oder einen Antriebsstrang wie oben beschrieben. Das Fahrzeug ist vorzugsweise elektrisch oder hybridisch angetrieben und/oder ein Nutzfahrzeug.

Die Erfindung, welche durch die Ansprüche definiert wird, st nicht auf die oben beschriebenen Ausführungsformen beschränkt.

Vielmehr können weitere Ausführungsformen erhalten werden.

Nachfolgend wird die Erfindung daher anhand bevorzugter Ausführungsformen unter Zuhilfenahme der beigefügten Zeichnungen näher beschrieben.

Es zeigen:
- Fig. 1: einen erste Ausführungsform der Erfindung, und
- Fig. 2: eine Erweiterung der Ausführungsform aus Fig. 1.

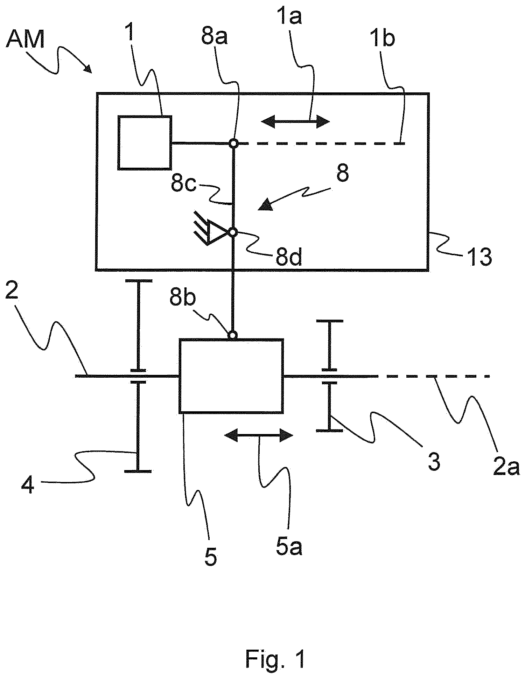

**Fig. 1** zeigt eine Schnittansicht einer Prinzipskizze einer ersten Ausführungsform der Erfindung. Es ist eine Anordnung eines Aktuatormoduls AM sowie einer Getriebewelle 2 gezeigt.

Die Getriebewelle 2, deren Getriebewellenachse 2a waagrecht von links nach rechts orientiert ist, weist ein erstes Zahnrad 3 und ein zweites Zahnrad 4 auf, die drehbar auf der Getriebewelle 2 vorgesehen sind. Beide Zahnräder 3, 4 weisen unterschiedliche Radien auf und bilden somit unterschiedliche Übersetzungsstufen. Weiter ist zwischen den Zahnrädern 3, 4 ein Schaltelement 5 in Form einer Schaltmuffe auf der Getriebewelle 2 vorgesehen. Dieses Schaltelement 5 ist in einer Schaltbewegung 5a verschiebbar ausgebildet, die hier als translatorische Bewegung parallel zur Getriebewellenachse 2a orientiert ist. Das Schaltelement 5 ist drehfest um die Getriebewellenachse 2a auf der Getriebewelle 2 vorgesehen.

Die hier gezeigte Anordnung von Getriebewelle 2, Zahnrädern 3, 4 und Schaltelement 5 entspricht einer Anordnung, wie sie aus dem Getriebebau bekannt ist. Zum Einstellen einer Schaltstellung, beispielsweise über die Übersetzungsstufe, die durch das erste Zahnrad 3 verkörpert ist, wird das Schaltelement 5 entsprechend einer Schaltbewegung 5a nach rechts bewegt. Hier tritt das Schaltelement 5 mit dem ersten Zahnrad 3 in Kontakt und bildet um die Getriebewellenachse 2a eine drehfeste Verbindung aus, so dass nun das erste Zahnrad 3 über das Schaltelement 5 drehfest mit der Getriebewelle 2 verbunden ist. Das Einstellen der Schaltstellung, die über die Übersetzungsstufe, die durch das zweite Zahnrad 4 verkörpert ist, erfolgt analog durch eine Schaltbewegung 5a des Schaltelements 5 nach links.

Das Aktuatormodul AM weist einen elektrisch betätigten Getriebesteller 1 auf, der dazu ausgebildet ist, eine Stellbewegung 1a durchzuführen, die in der Zeichnung durch den Doppelpfeil als translatorische Bewegung dargestellt ist. Die Stellbewegung 1a kann somit parallel zu einer Stellrichtung 1b ausgeführt werden, die in der Zeichnung durch eine gestrichelte Linie angedeutet ist. Die Stellrichtung 1b ist gegenüber der Getriebewellenachse 2a parallel orientiert.

Weiter ist zur Übertragung der Stellbewegung 1a an das Schaltelement 5 ein Übertragungsmechanismus 8 vorgesehen, so dass das Schaltelement 5 die Schaltbewegung 5a ausführen kann. Der Übertragungsmechanismus 8 weist einen ersten Koppelpunkt 8a auf, über den der Getriebesteller 1 mit dem Übertragungsmechanismus 8 gekoppelt ist. Der Übertragungsmechanismus 8 weist einen weiteren zweiten Koppelpunkt 8b auf, über den das Schaltelement 5 mit dem Übertragungsmechanismus 8 gekoppelt ist.

Der Koppelmechanismus 8 weist ferner ein Übertragungselement 8c auf, das um einen Drehpunkt 8d drehbar vorgesehen ist und das dazu ausgebildet ist, die Stellbewegung 1a, die auf den ersten Koppelpunkt 8a aufgeprägt wird, in die Schaltbewegung 5a zu übersetzen.

Die Verbindung von Getriebesteller 1 und Schaltelement 5 kann in den Koppelpunkten 8a, 8b unterschiedlich ausgeführt sein.

In einer Ausführungsform kann zumindest eine Verbindung in einem der beiden Koppelpunkte 8a, 8b gelenkig ausgebildet sein, so dass sich das Übertragungselement 8c um den ersten Koppelpunkt 8a relativ zu dem Getriebesteller 1 und/oder um den zweiten Koppelpunkt 8b relativ zu dem Schaltelement 5 drehen kann. Dabei kann beispielsweise vorgesehen sein, dass in dem entsprechenden Koppelpunkt 8a, 8b ein Lager, insbesondere ein Gleit- oder Wälzlager, vorgesehen ist. Bei einer solchen Verbindung muss der Teil des Übertragungselementes 8c, der mit dem entsprechenden Koppelpunkt 8a, 8b verbunden ist, dem Lager stets folgen können. Daher muss bei einer Drehbewegung des Koppelmechanismus' 8 um den Drehpunkt 8d ein Längenausgleich durchgeführt werden, um den ersten Koppelunkt 8a parallel zu der Stellrichtung 1b und den zweiten Koppelpunkt 8b parallel zu der Getriebewellenachse 2a nachzuführen. Dazu weist der Koppelmechanismus 8 einen Längenausgleichsmechanismus (nicht gezeigt) auf, der dazu ausgebildet ist, den Längenausgleich zwischen beiden Koppelpunkten 8a, 8b durchzuführen.

Der Längenausgleichsmechanismus kann beispielsweise durch ein Übertragungselement 8c realisiert sein, das zwischen den Koppelpunkten 8a, 8b in seiner Erstreckung veränderbar ausgebildet ist. Bei einer Drehbewegung des Übertragungselementes 8c ist dabei gewährleistet, dass das Übertragungselement 8c dem sich ändernden Abstand der Koppelpunkte 8a, 8b folgen kann.

Der Längenausgleichsmechanismus weist darüber hinaus eine elastische Vorspannkraft auf, die beispielsweise durch eine Feder aufgebracht werden kann. Die elastische Vorspannkraft ist dabei so orientiert, dass sie zwischen den Koppelpunkten 8a, 8b wirkt und so orientiert ist, dass sie stets in Erstreckungsrichtung des Übertragungselementes 8c wirkt. Auf diese Weise kann eine Längenänderung des Übertragungselementes 8c durch die elastische Vorspannkraft unterstützt werden, so dass der Längenausgleich zuverlässig erfolgen kann.

In einer konkreten Ausführungsform kann ein Längenausgleichsmechanismus ein Übertragungselement 8c in Form eines Stabes aufweisen, der mit seinen Enden in den Koppelpunkten 8a, 8b mittels Gleit- oder Wälzlagern drehbar an den Getriebesteller 1 bzw. an das Schaltelement 5 angebunden ist. Der Stab erstreckt sich somit zwischen den Koppelpunkten 8a, 8b. Darüber hinaus ist eine Feder vorgesehen (nicht gezeigt), deren elastische Vorspannkraft zwischen den Koppelpunkten 8a, 8b wirkt und den Stab dazu veranlasst, stets seine Erstreckung zwischen den Koppelpunkten 8a, 8b zu maximieren.

Die Verbindung des Übertragungselementes 8c in zumindest einem der Koppelpunkte 8a, 8b kann in einer alternativen Ausführungsform jedoch auch als abwälzende und/oder abgleitende Ankopplung ausgebildet sein. Dazu ist in zumindest einem der Koppelpunkte 8a, 8b eine Kontaktflächenpaarung (nicht gezeigt) ausgebildet, über die das Übertragungselement 8c mit dem Getriebesteller 1 und/oder mit dem Schaltelement 5 in Kontakt steht. Die Stellbewegung 1b des Getriebestellers 1 kann nun über die Kontaktflächenpaarung in dem ersten Koppelpunkt 8a auf das Übertragungselement 8c übertragen werden, wobei eine Kontaktfläche auf dem Getriebesteller 1 und die andere Kontaktfläche auf dem Übertragungselement 8c ausgebildet ist. Genauso kann auch eine Drehbewegung des Übertragungselementes 8c auf das Schaltelement 5 übertragen werden. Auch hier kann in dem zweiten Koppelpunkt 8b eine Kontaktflächenpaarung vorgesehen sein, wobei eine Kontaktfläche auf dem Schaltelement 5 und die andere Kontaktfläche auf dem Übertragungselement 8c ausgebildet ist. Die jeweiligen Kontaktflächen in den Kontaktflächenpaarungen sind dazu ausgebildet, um aneinander abzuwälzen und/oder abzugleiten. Dazu kann zumindest eine Kontaktfläche gekrümmt ausgebildet sein. Dreht sich das Übertragungselement 8c um den Drehpunkt 8d, so erfolgt ein Abwälzen und/oder Abgleiten der Kontaktflächen in den entsprechenden Kontaktflächenpaarungen. Dabei wandert aufgrund des Abwälz- und/oder Abgleitvorgangs der Kontaktpunkt zwischen den Kontaktflächen innerhalb der Kontaktflächenpaarung. Ein Längenausgleich muss daher hier nicht zwingend vorgesehen sein, da dies durch den wandernden Kontaktpunkt realisiert ist.

Das Aktuatormodul AM weist ein Gehäuse 13 auf, in dem der Getriebesteller 1 und der Übertragungsmechanismus 8 vorgesehen sind. Das Gehäuse 13 weist in der Zeichnung nach unten eine Öffnung auf, so dass das Übertragungselement 8c mit dem zweiten Koppelpunkt 8b mit dem Schaltelement 5 verbunden werden kann. Mit dem Gehäuse 13 ist es möglich, das Aktuatormodul AM in oder an dem Getriebe, in dem die Getriebewelle 2 vorgesehen ist, als integrales Bauteil zu montieren. Wartung und Montage werden dadurch erheblich vereinfacht, indem lediglich das Aktuatormodul AM als Ganzes gewechselt werden muss.

Die Funktionsweise der gezeigten Anordnung stellt sich wie folgt dar:
Zunächst ist die gezeigte Anordnung aus Aktuatormodul AM und Getriebewelle 2 wie dargestellt angeordnet. Das Schaltelement 5 befindet sich zwischen den Zahnrädern 3, 4. Somit befindet sich die Anordnung in der Neutralstellung. Zum Einstellen einer Schaltstellung, die durch das erste Zahnrad 3 verkörpert ist, führt der Getriebesteller 1 eine Stellbewegung 1a in Stellrichtung 1b in der Zeichnung nach links aus. Dadurch wird der erste Koppelpunkt 8a entlang der Stellrichtung 1b nach links bewegt wodurch das Übertragungselement 8c um den Drehpunkt 8d gegen den Uhrzeigersinn gedreht wird. Dadurch wird weiter der zweite Koppelpunkt 8b und somit das Schaltelement 5 in einer Schaltbewegung 5a nach rechts parallel zu der Getriebewellenachse 2a bewegt.

Dies erfolgt so weit, bis das Schaltelement 5 an das erste Zahnrad 3 stößt, wodurch, die gewünschte Schaltstellung eingestellt wird. Das Einstellen einer anderen Schaltstellung, nämlich der, die durch das zweite Zahnrad 4 verkörpert ist oder der Neutralstellung, erfolgt analog durch eine entsprechende Stellbewegung 1a des Getriebestellers 1 nach rechts unten bzw. zurück in die gezeigte Stellung.

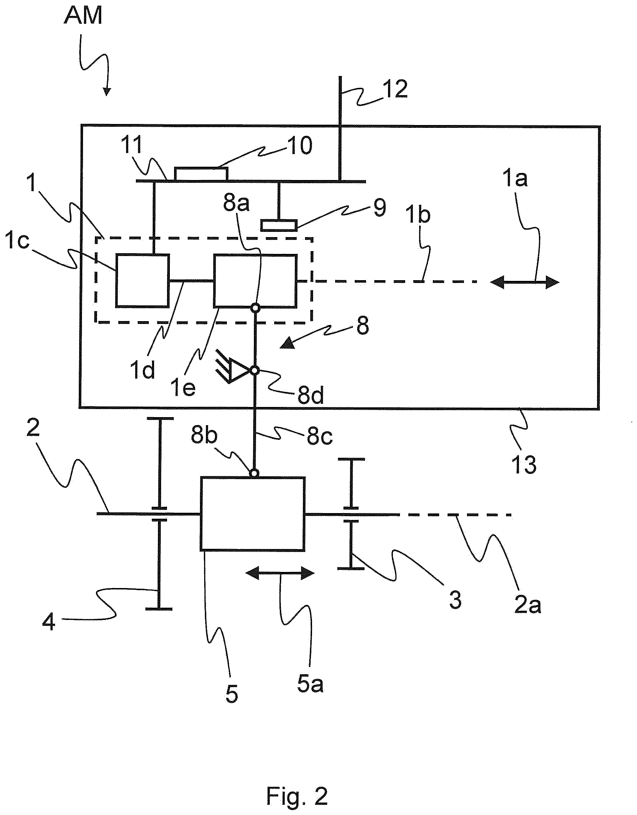

**Fig. 2** zeigt eine Schnittansicht einer Prinzipskizze einer Erweiterung der ersten Ausführungsform der Erfindung. Die Erweiterung betrifft dabei das Aktuatormodul AM. Identische Elemente sind hier mit denselben Bezugszeichen wie in Fig. 1 bezeichnet. Zu deren Erläuterung wird daher auf die Beschreibung von Fig. 1 verwiesen.

Der Getriebesteller 1 ist hier durch einen gestrichelten Kasten kenntlich gemacht. Er weist als elektrisch betätigtes Stellelement einen Elektromotor 1c sowie eine Kombination aus Spindel 1d und Mutter 1e auf, die beispielsweise als Übersetzung eine Kugelumlaufübersetzung ausbilden. Der erste Koppelpunkt 8a ist hier auf der Mutter 1e ausgebildet. Zur Erzeugung der Stellbewegung 1a erzeugt hier der Elektromotor 1c eine Drehbewegung, die über die Spindel 1d auf die Mutter 1e wirkt, welche sich dann aufgrund der Kugelumlaufübersetzung entsprechend der Stellbewegung 1a bewegt. Somit kann die Stellbewegung 1a auf den Übertragungsmechanismus 8 in dem ersten Koppelpunkt 8a aufgeprägt werden.

Weiter ist hier ein Erfassungsmittel 9 gezeigt, das beispielsweise einen Positionssensor aufweist. Das Erfassungsmittel 9 ist dazu ausgebildet, die Stellbewegung 1a zu erfassen. Dies kann beispielsweise dadurch erfolgen, dass die Position der Mutter 1e entlang der Stellrichtung 1b erfasst wird.

Weiter ist ein Steuermittel 10 vorgesehen, das dazu ausgebildet ist, Steuerbefehle zu erzeugen, um den Getriebesteller 1, insbesondere dessen Elektromotor 1c, zur Erzeugung der Stellbewegung 1a anzusteuern. Das Steuermittel 10 ist daher dazu ausgebildet, Informationen über den aktuellen Status des Aktuatormoduls AM, also beispielsweise welche Schaltstellung aktuell eingestellt ist, zu berücksichtigen. Dazu ist weiter eine Schnittstelle 12 vorgesehen, die dazu ausgebildet ist, mit einem BUS-System, insbesondere mit CAN, verbunden zu werden. Über diese Schnittstelle 12 können Informationen an das Steuermittel 10 gesendet werden, beispielsweise eine Soll-Schaltstellung. Ferner könne auch Informationen, beispielsweise welche Schaltstellung aktuell eingestellt ist, versendet werden. Das kann beispielsweise an das BUS-System erfolgen.

Das Aktuatormodul AM verfügt schließlich über eine Datenverbindung 11, worüber das Steuermittel 10, das Erfassungsmittel 9 und die Schnittstelle 12 miteinander zur Kommunikation verbunden sind. Ferner ist auch über die Datenverbindung 11 auch eine Anbindung des Elektromotors 1c realisiert.

Sämtliche Elemente des Aktuatormoduls AM sind hier innerhalb des Gehäuses 13 vorgesehen. Somit ist es auch hier möglich, das Aktuatormodul AM in oder an dem Getriebe, in dem die Getriebewelle 2 vorgesehen ist, als integrales Bauteil zu montieren. Wartung und Montage werden dadurch erheblich vereinfacht, indem lediglich das Aktuatormodul AM als Ganzes gewechselt werden muss.

Die hier gezeigten Ausführungsformen wirken nicht beschränkend auf den Gegenstand der Erfindung. Vielmehr könne weitere Gegenstände erhalten werden.

Es ist beispielsweise denkbar, die in den Figuren 1 und 2 gezeigten Aktuatormodule AM auch ohne Gehäuse 13 auszubilden. Stattdessen kann eine Trägerplatte vorgesehen sein, auf der sämtliche Elemente des entsprechenden Aktuatormoduls AM vorgesehen sind.

### BEZUGSZEICHENLISTE

- AM: Aktuatormodul
- 1: Getriebesteller
- 1a: Stellbewegung
- 1b: Stellrichtung
- 1c: Elektromotor
- 1d: Spindel
- 1e: Mutter
- 2: Getriebewelle
- 2a: Getriebewellenachse
- 3: erstes Zahnrad
- 4: zweites Zahnrad
- 5: Schaltelement
- 5a: Schaltbewegung
- 7: Neigungswinkel
- 8: Übertragungsmechanismus
- 8a: erster Koppelpunkt
- 8b: zweiter Koppelpunkt
- 8c: Übertragungselement
- 8d: Drehpunkt
- 9: Erfassungsmittel
- 10: Steuermittel
- 11: Datenverbindung
- 12: Schnittstelle

## Patentansprüche

1. Aktuatormodul (AM) für ein Getriebe mit mindestens zwei Übersetzungsstufen, aufweisend:
- einen Getriebesteller (1) der dazu ausgebildet ist, eine Stellbewegung (1a) parallel zu einer Stellrichtung (1b) auszuführen;
- ein Erfassungsmittel (9); und
- einen Übertragungsmechanismus (8), der dazu ausgebildet ist, die Stellbewegung (1a) in eine Schaltbewegung (5a) umzusetzen, die eine Einstellung einer Schaltstellung in dem Getriebe bewirkt, wobei
der Übertragungsmechanismus (8) einen ersten Koppelpunkt (8a) aufweist, über den er mit dem Getriebesteller (1) verbunden ist und dessen Stellbewegung (1a) aufnehmen kann, wobei
der Übertragungsmechanismus (8) einen zweiten Koppelpunkt (8b) aufweist, über den er mit einem Schaltelement (5) eines Getriebes verbunden werden kann, um auf das Schaltelement (5) die Schaltbewegung (5a) aufzuprägen, wobei
der Übertragungsmechanismus (8) ein Übertragungselement (8c) aufweist, das dazu ausgebildet ist, die Stellbewegung (1a) in die Schaltbewegung (5a) umzusetzen, wobei
das Erfassungsmittel (9) dazu ausgebildet ist, die Stellbewegung (1a) und/oder die Schaltbewegung (5a) und/oder eine Bewegung des Übertragungselementes (8) zu erfassen, und wobei
der Getriebesteller (1) elektrisch betätigbar ist, wobei
das Übertragungselement (8c) um einen Drehpunkt (8d), der zwischen den Koppelpunkten (8a, 8b) liegt, drehbar vorgesehen ist und dazu ausgebildet ist, bei Aufprägen der Stellbewegung (1a) mittels Drehung eine Schaltbewegung (5a) zu erzeugen
**dadurch gekennzeichnet, dass**
das Aktuatormodul (AM), einen Längenausgleichsmechanismus aufweist, der dazu ausgebildet ist, einen Längenausgleich zwischen den Koppelpunkten (8a, 8b) bei Aufbringen der Stellbewegung (1a) durchzuführen, wobei
der Längenausgleichsmechanismus eine elastische Vorspannung aufweist, die zwischen den Koppelpunkten (8a, 8b) wirkt und so orientiert ist, dass sie stets in Erstreckungsrichtung des Übertragungselementes (8c) wirkt.

2. Aktuatormodul (AM) nach Anspruch 1, wobei
das Übertragungselement (8c) dazu ausgebildet ist, eine Übersetzung der Stellbewegung (1a) in die Schaltbewegung (5a) zu bewirken.

3. Aktuatormodul (AM) nach einem der vorangegangenen Ansprüche, wobei
der Getriebesteller (1) zur Erzeugung der Stellbewegung (1a) ein elektrisch betätigtes Stellelement aufweist.

4. Aktuatormodul (AM) nach einem der vorangegangenen Ansprüche, wobei der Getriebesteller (1) eine Übersetzung aufweist.

5. Aktuatormodul (AM) nach einem der vorangegangenen Ansprüche, aufweisend:
- ein Steuermittel (10), das dazu ausgebildet ist, den Getriebesteller (1) zur Erzeugung der Stellbewegung (1a) anzusteuern, und/oder
- eine Schnittstelle (12), die dazu ausgebildet ist, Steuerbefehle zu empfangen und/oder Statusinformationen des Aktuatormoduls (AM) weiterzugeben.

6. Aktuatormodul (AM) nach einem der vorangegangenen Ansprüche, wobei
die Verbindung zwischen dem Getriebesteller (1) und dem Übertragungsmechanismus (8) in dem ersten Koppelpunkt (8a) drehbar ausgebildet ist oder eine Kontaktflächenpaarung aufweist.

7. Aktuatormodul (AM) nach einem der vorangegangenen Ansprüche, weiter aufweisend ein Gehäuse oder eine Trägerplatte, das oder die dazu ausgebildet ist, zumindest den Getriebesteller (1) und den Übertragungsmechanismus (8) aufzunehmen.

8. Getriebe aufweisend:
- ein Aktuatormodul (AM) nach einem der Ansprüche 1 bis 7, und
- ein Schaltelement (5), insbesondere eine Schaltmuffe, das dazu ausgebildet ist, eine Schaltbewegung (5a) durchzuführen, um in dem Getriebe eine Schaltstellung einzustellen, wobei
das Schaltelement (5) über den zweiten Koppelpunkt (8b) mit dem Übertragungsmechanismus (8) zur Aufprägung der Schaltbewegung (5a) auf das Schaltelement (5) verbunden ist, wobei
das Getriebe für ein, vorzugsweise elektrisch oder hybridisch angetriebenes, Fahrzeug und/oder für ein Nutzfahrzeug ausgebildet ist.

9. Getriebe nach Anspruch 8, wobei die Verbindung zwischen dem Schaltelement (5) und dem
Übertragungsmechanismus (8) in dem zweiten Koppelpunkt (8b) drehbar ausgebildet ist oder eine Kontaktflächenpaarung aufweist.

10. Antriebsstrang für ein Fahrzeug, aufweisend ein Getriebe nach einem der Ansprüche 8 oder 9.

11. Fahrzeug aufweisend ein Getriebe nach einem der Ansprüche 8 oder 9 oder einen Antriebsstrang nach Anspruch 10.

## Claims

1. Actuator module (AM) for a transmission having at least two translation stages, comprising:
- a transmission actuator (1) which is configured to perform an actuating movement (1a) parallel to an actuating direction (1b);
- a detection means (9); and
- a transmission mechanism (8), which is configured to convert the actuating movement (1a) into a shift movement (5a) which causes a shift position to be set in the transmission, wherein
the transmission mechanism (8) has a first coupling point (8a) via which it is connected to the transmission actuator (1) and can receive its actuating movement (1a), wherein
the transmission mechanism (8) has a second coupling point (8b) via which it can be connected to a shift element (5) of a transmission in order to apply the shift movement (5a) to the shift element (5), wherein
the transmission mechanism (8) has a transmission element (8c) which is configured to convert the actuating movement (1a) into the shift movement (5a), wherein
the detection means (9) is configured to detect the actuating movement (1a) and/or the shift movement (5a) and/or a movement of the transmission element (8), and wherein
the transmission actuator (1) can be actuated electrically, wherein
the transmission element (8c) is provided to rotate about a rotation point (8d) between the coupling points (8a, 8b), and is configured to generate a shift movement (5a) by means of rotation when the actuating movement (1a) is applied,
**characterised in that**
the actuator module (AM) has a length compensation mechanism, which is configured to perform a length compensation between the coupling points (8a, 8b) when the actuating movement (1a) is applied, wherein
the length compensation mechanism has an elastic prestress which acts between the coupling points (8a, 8b) and is orientated in such a way that it always acts in the direction of extension of the transmission element (8c).

2. Actuator module (AM) according to claim 1, wherein
the transmission element (8c) is configured to cause a translation of the actuating movement (1a) into the shift movement (5a).

3. Actuator module (AM) according to any one of the preceding claims, wherein
the transmission actuator (1) has an electrically actuated actuating element for generating the actuating movement (1a).

4. Actuator module (AM) according to any one of the preceding claims, wherein the transmission actuator (1) comprises a translation.

5. Actuator module (AM) according to any one of the preceding claims, having:
- a control means (10), which is configured to control the transmission actuator (1) to generate the actuating movement (1a), and/or
- an interface (12), which is configured to receive control commands and/or pass on status information of the actuator module (AM).

6. Actuator module (AM) according to any one of the preceding claims, wherein
the connection between the transmission actuator (1) and the transmission mechanism (8) is configured to be rotatable at the first coupling point (8a) or has a contact surface pairing.

7. Actuator module (AM) according to any one of the preceding claims, further having a housing or a support plate, which is configured to accommodate at least the transmission actuator (1) and the transmission mechanism (8).

8. Transmission having:
- an actuator module (AM) according to any one of claims 1 to 7, and
- a shift element (5), in particular a shift collar, which is configured to perform a shift movement (5a) in order to set a shift position in the transmission, wherein
the shift element (5) is connected via the second coupling point (8b) to the transmission mechanism (8) for applying the shift movement (5a) to the shift element (5), wherein
the transmission is configured for a vehicle, preferably an electrically or hybrid-powered vehicle, and/or for a utility vehicle.

9. Transmission according to claim 8, wherein
the connection between the shift element (5) and the transmission mechanism (8) at the second coupling point (8b) is configured to be rotatable or has a contact surface pairing.

10. Drive train for a vehicle having a transmission according to any one of claims 8 or 9.

11. Vehicle having a transmission according to any one of claims 8 or 9 or a drive train according to claim 10.

## Revendications

1. Module actionneur (AM) pour une transmission avec au moins deux étages de surmultiplication, présentant :
- un organe de réglage de transmission (1) qui est configuré pour réaliser un mouvement de réglage (1a) parallèlement à une direction de réglage (1b) ;
- un moyen de détection (9) ; et
- un mécanisme de transfert (8) qui est configuré pour convertir le mouvement de réglage (1a) en un mouvement de commutation (5a) qui exerce un réglage d'une position de commutation dans la transmission, dans lequel
le mécanisme de transfert (8) présente un premier point de couplage (8a) par l'intermédiaire duquel il est relié à l'organe de réglage de transmission (1) et peut recevoir le mouvement de réglage (1a) de celui-ci, dans lequel
le mécanisme de transfert (8) présente un second point de couplage (8b) par l'intermédiaire duquel il peut être relié à un élément de commutation (5) d'une transmission pour imprimer le mouvement de commutation (5a) à l'élément de commutation (5), dans lequel
le mécanisme de transfert (8) présente un élément de transfert (8c) qui est configuré pour convertir le mouvement de réglage (1a) en mouvement de commutation (5a), dans lequel
le moyen de détection (9) est configuré pour détecter le mouvement de réglage (1a) et/ou le mouvement de commutation (5a) et/ou un mouvement de l'élément de transfert (8), et dans lequel
l'organe de réglage de transmission (1) peut être activé électriquement, dans lequel
l'élément de transfert (8c) est prévu de manière à pouvoir tourner autour d'un point de rotation (8d) qui se trouve entre les points de couplage (8a, 8b), et est configuré pour générer un mouvement de commutation (5a) au moyen d'une rotation lors de l'impression du mouvement de réglage (1a)
**caractérisé en ce que**
le module actionneur (AM) présente un mécanisme de compensation de longueur qui est configuré pour réaliser une compensation de longueur entre les points de couplage (8a, 8b) lors de la mise en oeuvre du mouvement de réglage (1a), dans lequel
le mécanisme de compensation de longueur présente une précontrainte élastique qui s'exerce entre les points de couplage (8a, 8b) et est orientée de sorte qu'elle s'exerce constamment dans la direction d'allongement de l'élément de transfert (8c).

2. Module actionneur (AM) selon la revendication 1, dans lequel
l'élément de transfert (8c) est configuré pour exercer une surmultiplication du mouvement de réglage (1a) en mouvement de commutation (5a).

3. Module actionneur (AM) selon l'une quelconque des revendications précédentes, dans lequel
l'organe de réglage de transmission (1) destiné à générer le mouvement de réglage (1a) présente un élément de réglage actionné électriquement.

4. Module actionneur (AM) selon l'une quelconque des revendications précédentes, dans lequel l'organe de réglage de transmission (1) présente une surmultiplication.

5. Module actionneur (AM) selon l'une quelconque des revendications précédentes, présentant :
- un moyen de commande (10) qui est configuré pour commander l'organe de réglage de transmission (1) destiné à la génération du mouvement de réglage (1a), et/ou
- une interface (12) qui est configurée pour recevoir des instructions de commande et/ou transmettre des informations d'état du module actionneur (AM).

6. Module actionneur (AM) selon l'une quelconque des revendications précédentes, dans lequel
la liaison entre l'organe de réglage de transmission (1) et le mécanisme de transfert (8) dans le premier point de couplage (8a) est configurée de manière à pouvoir tourner ou présente une paire de surfaces de contact.

7. Module actionneur (AM) selon l'une quelconque des revendications précédentes, présentant en outre un carter ou une plaque de support qui est configuré(e) pour recevoir au moins l'organe de réglage de transmission (1) et le mécanisme de transfert (8).

8. Transmission présentant :
- un module actionneur (AM) selon l'une quelconque des revendications 1 à 7, et
- un élément de commutation (5), en particulier un manchon de commutation, qui est configuré pour réaliser un mouvement de commutation (5a), pour régler une position de commutation dans la transmission, dans lequel
l'élément de commutation (5) est relié au mécanisme de transfert (8) par l'intermédiaire du second point de couplage (8b) pour imprimer le mouvement de commutation (5a) à l'élément de commutation (5), dans lequel
la transmission est configurée pour un véhicule, de préférence à transmission électrique ou hybride, et/ou pour un véhicule utilitaire.

9. Transmission selon la revendication 8, dans laquelle
la liaison entre l'élément de commutation (5) et le mécanisme de transfert (8) dans le second point de couplage (8b) est configurée de manière à pouvoir tourner ou présente une paire de surfaces de contact.

10. Train d'entraînement pour un véhicule, présentant une transmission selon l'une quelconque des revendications 8 ou 9.

11. Véhicule présentant une transmission selon l'une quelconque des revendications 8 ou 9 ou un train d'entraînement selon la revendication 10.
